**Europäisches Patentamt**

**European Patent Office**

**Office européen des brevets**

(19)

(11) Veröffentlichungsnummer: **0 019 661**
A1

(12) # EUROPÄISCHE PATENTANMELDUNG

(21) Anmeldenummer: 79104057.9

(22) Anmeldetag: 19.10.79

(51) Int. Cl.³: **B 29 F 3/00,** B 29 F 3/10, H 01 B 13/14

(30) Priorität: 21.04.79 DE 2916185

(43) Veröffentlichungstag der Anmeldung: 10.12.80 Patentblatt 80/25

(84) Benannte Vertragsstaaten: **AT BE CH FR GB IT NL**

(71) Anmelder: **Kabel- und Metallwerke Gutehoffnungshütte Aktiengesellschaft, Kabelkamp 20 Postfach 260, D-3000 Hannover 1 (DE)**

(72) Erfinder: **Dänekas, Franz, Theodor-Heuss-Strasse 27, D-3012 Langenhagen (DE)**
Erfinder: **Hanisch, Ferdinand, Dr. rer. nat., Gorch-Fock-Weg 40, D-3006 Burgwedel 1 (DE)**

(74) Vertreter: **Mende, Eberhard, Dipl.-Ing., Kabelkamp 20, D-3000 Hannover 1 (DE)**

(54) **Verfahren und Vorrichtung zur Herstellung von langgestrecktem Gut aus durch Einwirkung von Feuchtigkeit vernetzbaren Polymeren.**

(57) Zur kontinuierlichen Herstellung von strangförmigem Gut mit einer Umhüllung aus durch Feuchtigkeitseinwirkung vernetzbaren thermoplastischen oder elastomeren Werkstoffen werden Stabilisatoren und/oder andere in der Umhüllung verbleibende Zusätze nach Abschluss der für die Feuchtigkeitsvernetzung notwendigen Pfropfung von Silanen der schmelzflüssigen Masse zugegeben (8).

BEZEICHNUNG GEÄNDERT,
siehe Titelseite

**K a b e l -  u n d  M e t a l l w e r k e**
Gutehoffnungshütte Aktiengesellschaft

1-1678

19. April 1979

Verfahren zur Herstellung von langgestrecktem Gut aus durch
Einwirkung von Feuchtigkeit vernetzbaren Polymeren

---

Die vorliegende Erfindung betrifft ein Verfahren zur Herstellung von langgestrecktem Gut aus durch Einwirkung von Feuchtigkeit vernetzbaren Polymeren, wie Olefinpolymerisaten oder Olefinmischpolymerisaten, Elastomeren oder thermoplastischen Kautschuken, insbesondere von Umhüllungen für elektrische Kabel, Rohre und dergl. Hierbei wird das Basismaterial mit Silanen oder Silanverbindungen gemischt, letztere auf die Moleküle des Basismaterials aufgepfropft, und das so vorbereitete Material gelangt anschließend zur Ausformung.

Der zunehmende Einsatz von polymeren Werkstoffen in der Technik läßt auch die Frage der Stabilisierung solcher Werkstoffe immer mehr an Bedeutung gewinnen, wobei es in erster Linie weitgehend unerheblich ist, ob eine Stabilisierung gegen thermische oder elektrische Einflüsse notwendig wird oder für welche Anwendungsgebiete die Polymere eingesetzt werden sollen.

0019661

Festzustellen ist jedoch, daß die elektrische Stabilisierung als sogenannte Spannungsstabilisierung inzwischen eine besondere Bedeutung für die Isolierungen elektrischer Kabel und Leitungen erlangt hat. So ist es üblich
geworden, im Bereich hoher Übertragungsspannungen, d. h. 60 kV und darüber,
dem Isolierwerkstoff spannungsstabilisierende Mittel zuzusetzen, während
für niedrigere Spannungen eine solche Stabilisierung zwar noch nicht die
Regel ist, aber dennoch schon oft praktiziert wird.

Dies alles gilt für den Fall, daß für die Isolierung unvernetzte thermoplastische Materialien, beispielsweise ein thermoplastisches Polyäthylen,
eingesetzt werden. Für vernetzte Isolierwerkstoffe jedoch, seien es dampfvernetzte oder trockenvernetzte Materialien, hat sich eine Spannungsstabilisierung bisher nicht durchsetzen können. Das hat auch seine besonderen
Gründe, denn einmal wirken die Zerfallsprodukte der zur Vernetzung vorgesehenen Peroxide, vor allem der Cumylalkohol und das Acetophenon, selbst
spannungsstabilisierend und zum anderen wurde eine Herabsetzung der Vernetzungsausbeute der eingesetzten Peroxide in Gegenwart von Spannungsstabilisatoren beobachtet. Ein Anheben der Dosierungsmenge könnte hier zwar
Abhilfe schaffen, dies wäre aber mit einer entsprechenden Kostensteigerung
verbunden, ganz abgesehen von neuen verarbeitungsgemäßen Problemen, etwa
Verarbeitungssicherheit im Extruder u. ä.

Zu berücksichtigen ist ferner bei der Art der beschriebenen Vernetzung von
polymeren Werkstoffen die hohe Temperaturbelastung, die die Materialien
während des Vernetzungsvorganges - 160° C und höher - erfahren.

Da aber die Stabilisierung von vernetzbaren Werkstoffen auf Polymerbasis
Vorteile hat, liegt der Erfindung die Aufgabe zugrunde, hier eine Möglichkeit zu finden, ohne jegliche Beeinträchtigung der Verarbeitungssicherheit
eine geeignete Stabilisierung zu bewirken.

Zur Lösung des der Erfindung zugrunde liegenden Problems geht die Erfindung
aus von der sogenannten Feuchtigkeitsvernetzung nach Aufpfropfen von Silanverbindungen und sieht vor, daß die Stabilisatoren und/oder andere im ausgeformten Gut verbleibende Zusätze in die schmelzflüssige Masse nach Abschluß der Pfropfung eingebracht werden. Hierdurch ist es möglich, die Art des Stabilisators, im Falle elektrischer Kabel z. B. des Spannungsstabilisators und/oder der Zusätze, wie Alterungsschutzmittel, Katalysatoren u. ä., ohne Berücksichtigung ihrer negativen Einflüsse auf das die Pfropfung auslösende Peroxid oder umgekehrt ohne Berücksichtigung des Einflusses auf den Stabilisator oder die anderen Zusätze frei zu wählen. Maßgeblich allein können nunmehr z. B. die Qualität des Stabilisators, die benötigte Menge oder der Preis sein. Die Verarbeitungssicherheit ist in jedem Falle gegeben. Hinzu kommt, daß auch die thermische Belastung des Stabilisators bzw. der Zusätze erheblich vermindert wird, was zu einer weiteren Verbesserung der Qualität des Endproduktes führt.

In Weiterführung des Erfnndungsgedankens ist ferner wesentlich, daß die Herstellung des Gutes kontinuierlich erfolgt und daß die Pfropfung zum Zwecke der Feuchtigkeitsvernetzung sowie die Formgebung des Endproduktes zwar im gleichen Arbeitsgang, aber in einer anschließenden gesonderten Arbeitsstufe erfolgt. In diesem Fall ist es von besonderem Vorteil, wenn die Zugabe der Stabilisatoren und/oder anderer Zusätze, also beispielsweise der Alterungsschutzmittel, im Übergabebereich zur Arbeitsstufe "Ausformen" erfolgt. Dies läßt sich in einfachster, aber wirkungsvoller Weise über eine Normaldruckdosierung erreichen.

Mitunter kann es aber auch von Vorteil sein, die Zugabe der Stabilisatoren, thermische oder elektrische, sowie anderer Zusätze erst im Bereich des Ausformvorganges selbst vorzunehmen. Dadurch wird ein gleichmäßigeres und problemfreies Einzugsverhalten in den Formgebungsextruder erreicht, insbesondere dann, wenn relativ große Mengen der flüssigen oder verflüssigten Zusätze oder Gemische zugegeben werden sollen. So kann es zweckmäßig sein, hierfür eine Druckdosierung in den ersten Gängen des Formgebungsextruders über dessen Zylinderwand oder auch über die Schnecke vorzunehmen. Alle diese im Rahmen der Erfindung getroffenen Maßnahmen ermöglichen es, z. B. siloxanvernetzte Adern für elektrische Kabel mit den erprobten Stabilisatoren oder sogar mit den gleichen Mengen Cumylalkohol und Acetophenon zu stabilisieren, die beim dampfvernetzten Polyäthylen erst durch den Zerfall der Peroxide entstehen.

In Weiterführung des Erfindungsgedankens kann es weiterhin von Vorteil sein, wenn die Stabilisatoren und/oder Zusätze gleichzeitig als Träger für die den Vernetzungsvorgang bewirkende Feuchtigkeit (Wasser) verwendet werden. So wird z. B. in den Spannungsstabilisator das zur chemischen Vernetzung notwendige Wasser eingemischt, etwa als Öl-Wasser-Emulsion, und im Formgebungsextruder homogen verteilt. Die bisher übliche Wasserlagerung im Anschluß an die Formgebung des Gutes braucht dann, wenn überhaupt, nur kurzzeitig zum Einsatz zu kommen.

Die Eingabe des Wassers in den Formgebungsextruder könnte nach einem weiteren Erfindungsgedanken so rechtzeitig erfolgen, daß durch die dort erhöhte Temperatur bei der Ausformung und anschließende langsame Abkühlung zumindest bereits eine Anvernetzung erfolgt.

Die Erfindung sei an Hand des in der Fig. als Ausführungsbeispiel dargestellten Herstellungsverfahrens für ein elektrische Hochspannungskabel näher erläutert.

In den Einfülltrichter 1 des Extruders 2 wird das Basispolymer, etwa Polyäthylen, mit dem Silan und gegebenenfalls daringelösten Zusätzen eingegeben. Im Ausführungsbeispiel hat der Zylinder des Extruders 2 z. B. einen Durchmesser D von 150 mm und eine Länge von 25 D. Das eintretende, mit der Silanlösung benetzte Granulat wird durch die rotierende Schnecke 3 intensiv vermischt, aufgeschmolzen und im weiteren Verlauf, noch im gleichen Extruder, gepfropft.

Entsprechend der eingestellten Fördermenge wird dann das gepfropfte Material über den Verbindungsflansch 4 dem zweiten Extruder 5 zugeführt, der als Austragsextruder ausgebildet ist und in seinen Abmessungen, z. B. 150/15 D, so gewählt ist, daß die vom Extruder 2 angelieferte Materialmenge am Spritzkopf 6 auf den durchgehenden Leiter 7 aufgebracht werden kann.

Um nun die Stabilisatoren beispielsweise unabhängig von den beim Pfropfvorgang auftretenden erhöhten Temperaturen schadlos für sie und vollwirksam in das Polymere einbauen zu können, ist nach der Erfindung am Extruder 5

0019661

eine Druckdosiervorrichtung 8 vorgesehen, mit deren Hilfe der Spannungsstabilisator, aber auch andere z. B. temperaturempfindliche Zusätze, in die Mischung eingebracht werden können. Von Vorteil ist insbesondere bei großen Förderleistungen eine Dosierung über mehrere Dosierstellen, wodurch die Gleichmäßigkeit des Extrudatausstoßes erhöht wird.

Als Stabilisatoren, die nach der Erfindung einsetzbar sind, können z. B. gewählt werden: kondensierte Aromaten, sowie Säure- oder Esterabkömmlinge, aromatische Amine, wie z. B. Diphenylaminderivate, aromatische Nitroverbindungen, wie z. B. Nitrophenolderivate, langkettig aliphatisch substituierte oder vinylierte Aromaten, bzw. Polymerisate davon, wie z. B. Styrol.

Je nach physikalischer Konsistenz der Zusätze oder Gewichte wird direkt flüssig dosiert, eventuell unter erhöhter Temperatur. Sich entmischende Systeme können durch Emulgatorzusätze stabilisiert werden, wobei auch Wasser in kleinsten Mengen geeignet sein kann, das zusätzlich die Vernetzung mit einleitet.

Abweichend von dem dargestellten Ausführungsbeispiel kann die Dosiervorrichtung 8 in gleicher oder entsprechend angepaßter Art auch am Verbindungsflansch 4 angebracht sein oder aber die Schnecke 9 des zweiten Extruders 5 könnte durchbohrte Stege aufweisen, über die die Stabilisatoren in das schmelzflüssige Polymermaterial gelangen.

**K a b e l -   u n d   M e t a l l w e r k e**
Gutehoffnungshütte Aktiengesellschaft

1-1678

19. April 1979

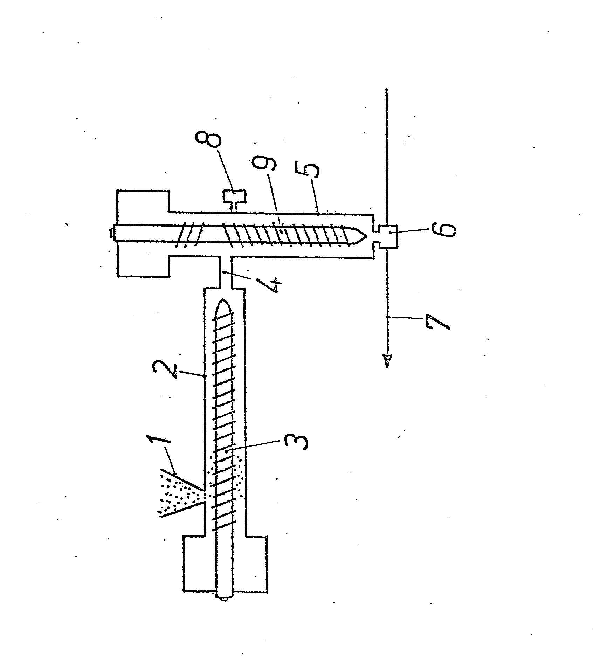

Patentansprüche

1. Verfahren zur kontinuierlichen Herstellung von langgestrecktem Gut aus durch Einwirkung von Feuchtigkeit vernetzbaren Polymeren, wie Olefinpolymerisaten oder Olefinmischpolymerisaten, Elastomeren oder thermoplastischen Kautschuken, insbesondere von Umhüllungen für elektrische Kabel, Rohre und dergl., bei dem das Basismaterial mit Silanen oder Silanverbindungen gemischt, letztere auf die Moleküle des Basismaterials aufgepfropft werden und das so vorbereitete Material anschließend zur Ausformung gelangt, dadurch gekennzeichnet, daß Stabilisatoren und/oder andere im ausgeformten Gut verbleibende Zusätze in die schmelzflüssige Masse nach Abschluß der Pfropfung eingebracht werden.

2. Verfahren nach Anspruch 1, bei dem nach der Pfropfung die Ausformung im gleichen Arbeitsgang, aber in einer anschließenden gesonderten Arbeitsstufe erfolgt, dadurch gekennzeichnet, daß die Zugabe der Stabilisatoren und/oder anderer Zusätze im Übergabebereich zur Arbeitsstufe "Ausformen" erfolgt.

- 2 -

3. Verfahren nach Anspruch 1, bei dem nach der Pfropfung die Ausformung im gleichen Arbeitsgang, aber in einer anschließenden gesonderten Arbeitsstufe erfolgt, dadurch gekennzeichnet, daß die Zugabe der Stabilisatoren und/oder anderer Zusätze während des Ausformungsvorganges erfolgt.

4. Verfahren nach Anspruch 1 oder einem der folgenden, dadurch gekennzeichnet, daß die Stabilisatoren und/oder Zusätze gleichzeitig als Träger für die den Vernetzungsvorgang bewirkende Feuchtigkeit (Wasser) verwendet werden.

5. Verfahren nach Anspruch 4, dadurch gekennzeichnet, daß durch die erhöhte Temperatur bei der Ausformung und die anschließende Abkühlung durch eingebrachtes Wasser bereits zumindest eine Anvernetzung erfolgt.

6. Vorrichtung zur Durchführung des Verfahrens nach Anspruch 1 oder einem der folgenden, bestehend aus zwei hintereinander geschalteten, durch einen besonderen Übergabebereich mechanisch fest miteinander verbundenen Extrudern, wobei der erste die Mischung, Homogenisierung und Pfropfung und der zweite die Ausformung übernimmt, dadurch gekennzeichnet, daß im Übergabebereich zwischen erstem und zweitem Extruder eine Dosiereinrichtung für die Stabilisatoren und/oder die anderen Zusätze vorgesehen ist.

7. Vorrichtung nach Anspruch 6, dadurch gekennzeichnet, daß im Schneckenzylinder des zweiten Extruders Anschlußmöglichkeiten für die Dosiereinrichtung vorgesehen sind.

8. Vorrichtung nach Anspruch 6, dadurch gekennzeichnet, daß die Schnecke des zweiten Extruders Dosierungsmöglichkeiten für die Stabilisatoren und/oder die anderen Zusätze aufweist.

Europäisches Patentamt

**EUROPÄISCHER RECHERCHENBERICHT**

0019661

Nummer der Anmeldung

EP 79 10 4057.9

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 458 776 (KABEL- UND METALL-WERKE GUTEHOFFNUNGSHÜTTE AG) <br> * Ansprüche 1 bis 10 * <br> -- | 1,6 |
| A | DE - A1 - 2 642 927 (BICC LTD.) <br> * Anspruch 1 * <br> -- | |
| A | DE - A1 - 2 554 525 (BICC LTD.) <br> * Ansprüche 1 bis 9 * <br> -- | |
| A | DE - A1 - 2 639 922 (KABEL- UND METALL-WERKE GUTEHOFFNUNGSHÜTTE AG) <br> * Anspruch 1 * <br> -- | |
| A | DE - A1 - 2 426 100 (KABEL- UND METALL-WERKE GUTEHOFFNUNGSHÜTTE AG) <br> * Anspruch 5 * <br> -- | |
| A | DE - A1 - 2 411 141 (KABEL- UND METALL-WERKE GUTEHOFFNUNGSHÜTTE AG) <br> * Anspruch 13 * <br> ---- | |

**KLASSIFIKATION DER ANMELDUNG (Int.Cl.)**

B 29 F 3/00
B 29 F 3/10
H 01 B 13/14

**RECHERCHIERTE SACHGEBIETE (Int. Cl.)**

B 29 F 3/00
C 08 J 3/00
H 01 B 13/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 04-07-1980 | BITTNER |

EPA form 1503.1 06.78